# EUROPEAN PATENT APPLICATION

(11) **EP 4 844 875 A1**
(43) Date of publication of application: **25.11.2026**
(21) Application number: 24918366.6
(22) Date of filing: 30.12.2024
(51) Int. Cl.: H01M 10/058, H01M 10/0525, H01M 10/42, H01M 4/136

(54) **LITHIUM ION BATTERY**

(30) Priority: 19.01.2024 CN 202410081615
(71) Applicant: Shenzhen Highpower Technology Co., Ltd., Shenzhen, Guangdong 518000 (CN)
(72) Inventor: ZHANG, Shuyan, Shenzhen, Guangdong 518000 (CN); LIU, Canzheng, Shenzhen, Guangdong 518000 (CN); GE, Chongyong, Shenzhen, Guangdong 518000 (CN); HAN, Xiaohui, Shenzhen, Guangdong 518000 (CN); LIAO, Xingqun, Shenzhen, Guangdong 518000 (CN)
(74) Representative: Herrero & Asociados, S.L.
(86) International application number: PCT/CN2024/143816
(87) International publication number: WO 2025/152758

(57) **Abstract**

To address the problems in the prior art that an increase in the electrical conductivity of a lithium-ion battery may lead to short circuits, and that an excessively low electrical conductivity may affect the electrochemical performance of the battery, the present disclosure provides a lithium-ion battery, including a positive electrode sheet and an electrolyte. The positive electrode sheet includes a positive electrode current collector, a bottom coating layer, and a positive electrode material layer. The bottom coating layer is disposed on the surface of the positive electrode current collector, and the positive electrode material layer is disposed on the bottom coating layer opposite to the surface of the positive electrode current collector. The electrical conductivity of the electrolyte, the electrical conductivity of the bottom coating layer, and the electrical conductivity of the positive electrode material layer satisfy the following relationship: $5.62 \leq \frac{{σ}_{e} {{σ}_{a}}^{3 / 2} {σ}_{c} ∗ 10}{{σ}_{e} {{σ}_{a}}^{3 / 2} + {σ}_{e} {σ}_{c} + {{σ}_{a}}^{3 / 2} {σ}_{c}} \leq 37.64$; where the electrical conductivity of the electrolyte is denoted as σe, in mS/cm; the electrical conductivity of the bottom coating layer is denoted as σa, in mS/cm; the electrical conductivity of the positive electrode material layer is denoted as σc, in mS/cm; the electrical conductivity of the electrolyte (σe) is 6.5-8.5 mS/cm; the electrical conductivity of the bottom coating layer (σa) is 1-6 mS/cm; the electrical conductivity of the positive electrode material layer (σc) is 1.6-12.5 mS/cm. The lithium-ion battery provided in the present disclosure can reduce the occurrence of short circuits in the battery, improve the cycle performance, avoid high-temperature combustion or explosion, and also enhance the pass rate in nail penetration tests.

## Description

The present application is based on and claims the priority of Chinese Patent Application No. 202410081615.5, titled "Lithium-ion battery", filed on January 19, 2024.

### TECHNICAL FIELD

The present application belongs to the technical field of lithium-ion batteries, and particularly relates to a lithium-ion battery.

### BACKGROUND

With lithium-ion batteries being increasingly applied in production and daily life, the safety of lithium-ion batteries during use requires heightened attention. When a lithium-ion battery undergoes a safety failure, four types of short circuits may occur, including a short circuit between the positive electrode current collector and the negative electrode active layer, a short circuit between the positive electrode current collector and the negative electrode current collector, a short circuit between the positive electrode active layer and the negative electrode current collector, and a short circuit between the positive electrode active layer and the negative electrode active layer. Among these types, the short circuit between the positive electrode current collector and the negative electrode active layer is the most hazardous due to its highest heat generation rate.

To improve the safety performance of lithium-ion batteries, a safety coating layer is formed on the surface of the positive electrode current collector, so as to prevent short circuits between the positive electrode current collector and the negative electrode active material layer. This measure also redirects the short circuit path to occur between the safety coating layer and the negative electrode current collector, or between the safety coating layer and the negative electrode active layer. The electrical conductivity of the safety coating layer affects the short-circuit current and the heat generation rate. A safety coating layer with high conductivity leads to a faster heat generation rate, which adversely affects the safety of the battery, whereas a safety coating layer with low conductivity provides higher safety but severely hinders electron conduction between the positive electrode active layer and the positive electrode current collector, thereby affecting the charge/discharge performance and cycle performance of the battery. Short circuits exist between the positive electrode active layer and the negative electrode active layer, and between the positive electrode active layer and the negative electrode current collector, and the electrical conductivity of the positive electrode active layer therefore also affects the safety of the battery as well as its charge/discharge and cycle performance. A positive electrode active layer with high electrical conductivity facilitates lithium-ion migration and electron conduction during charge/discharge, but increases the short-circuit current and the heat generation rate during a short circuit, which is unfavorable for improving safety. A positive electrode active layer with low electrical conductivity helps reduce the short-circuit current and the heat generation rate, but it hinders lithium-ion migration and electron conduction, thereby affecting the charge/discharge performance and cycle performance of the battery. In addition, the electrical conductivity of the electrolyte also affects the safety of the battery as well as its charge/discharge and cycle performance. While improving safety, it is also necessary to ensure high electrical performance. An increase in the electrical conductivity of the electrolyte reduces the internal resistance of the battery, but increases the risk of thermal failure caused by short circuits during nail penetration test. Conversely, an excessively low electrical conductivity of the electrolyte adversely affects the electrical performance of the battery.

### SUMMARY

To address the problems in the prior art that an increased electrical conductivity of the electrolyte causes the battery to be prone to short circuits, and an excessively low electrical conductivity adversely affects the electrical performance of the battery, a lithium-ion battery is provided.

The technical solution adopted by the present disclosure to solve the above technical problems is as follows:

The present disclosure provides a lithium-ion battery, including a positive electrode sheet and an electrolyte, the positive electrode sheet includes a positive electrode current collector, a bottom coating layer, and a positive electrode material layer; the bottom coating layer is disposed on a surface of the positive electrode current collector, the positive electrode material layer is disposed on a surface of the bottom coating layer opposite to the positive electrode current collector; and an electrical conductivity of the electrolyte, an electrical conductivity of the bottom coating layer, and an electrical conductivity of the positive electrode material layer satisfy the following relationship: $5.62 \leq \frac{{σ}_{e} {{σ}_{a}}^{3 / 2} {σ}_{c} ∗ 10}{{σ}_{e} {{σ}_{a}}^{3 / 2} + {σ}_{e} {σ}_{c} + {{σ}_{a}}^{3 / 2} {σ}_{c}} \leq 37.64$
where the electrical conductivity of the electrolyte is denoted as σe, in mS/cm;
the electrical conductivity of the bottom coating layer is denoted as σa, in mS/cm;
the electrical conductivity of the positive electrode material layer is denoted as σc, in mS/cm;
the electrical conductivity of the electrolyte (σe) is 6.5-8.5 mS/cm;
the electrical conductivity of the bottom coating layer (σa) is 1-6 mS/cm;
the electrical conductivity of the positive electrode material layer (σc) is 1.6-12.5 mS/cm.

Optionally, the electrical conductivity of the electrolyte, the electrical conductivity of the bottom coating layer, and the electrical conductivity of the positive electrode material layer satisfy the following relationship: $8.69 \leq \frac{{σ}_{e} {{σ}_{a}}^{3 / 2} {σ}_{c} ∗ 10}{{σ}_{e} {{σ}_{a}}^{3 / 2} + {σ}_{e} {σ}_{c} + {{σ}_{a}}^{3 / 2} {σ}_{c}} \leq 26.92$

Optionally, the electrical conductivity of the electrolyte is 7.14-8.05 mS/cm.

Optionally, the electrical conductivity of the bottom coating layer is 1.2-5.5 mS/cm.

Optionally, the electrical conductivity of the positive electrode material layer is 2.2-6.5 mS/cm.

Optionally, the electrical conductivity of the electrolyte, the electrical conductivity of the bottom coating layer, and the electrical conductivity of the positive electrode material layer satisfy the following relationship: $8.69 \leq \frac{{σ}_{e} {{σ}_{a}}^{3 / 2} {σ}_{c} ∗ 10}{{σ}_{e} {{σ}_{a}}^{3 / 2} + {σ}_{e} {σ}_{c} + {{σ}_{a}}^{3 / 2} {σ}_{c}} \leq 15.79$
the electrical conductivity of the electrolyte (σe) is 7.14-8.05 mS/cm;
the electrical conductivity of the bottom coating layer (σa) is 1.2-2.3 mS/cm;
the electrical conductivity of the positive electrode material layer (σc) is 3.04-4.5 mS/cm.

Optionally, the electrical conductivity of the electrolyte, the electrical conductivity of the bottom coating layer, and the electrical conductivity of the positive electrode material layer satisfy the following relationship: $13.23 \leq \frac{{σ}_{e} {{σ}_{a}}^{3 / 2} {σ}_{c} ∗ 10}{{σ}_{e} {{σ}_{a}}^{3 / 2} + {σ}_{e} {σ}_{c} + {{σ}_{a}}^{3 / 2} {σ}_{c}} \leq 26.92$
the electrical conductivity of the electrolyte (σe) is 7.14-8.05 mS/cm;
the electrical conductivity of the bottom coating layer (σa) is 1.6-5.5 mS/cm;
the electrical conductivity of the positive electrode material layer (σc) is 2.2-6.5 mS/cm.

Optionally, the electrical conductivity of the electrolyte, the electrical conductivity of the bottom coating layer, and the electrical conductivity of the positive electrode material layer satisfy the following relationship: $13.23 \leq \frac{{σ}_{e} {{σ}_{a}}^{3 / 2} {σ}_{c} ∗ 10}{{σ}_{e} {{σ}_{a}}^{3 / 2} + {σ}_{e} {σ}_{c} + {{σ}_{a}}^{3 / 2} {σ}_{c}} \leq 15.79$
the electrical conductivity of the electrolyte (σe) is 7.14-8.05 mS/cm;
the electrical conductivity of the bottom coating layer (σa) is 2.2-2.4 mS/cm;
the electrical conductivity of the positive electrode material layer (σc) is 3.04-4.5 mS/cm.

Optionally, the bottom coating layer includes a first active material and an inorganic filler, the positive electrode material layer includes a second active material; a mass percentage of the first active material in the bottom coating layer is 0%-98%; a mass percentage of the inorganic filler in the bottom coating layer is 0%-98%; and a mass percentage of the second active material in the positive electrode material layer is 95%-98.5%.

Optionally, the inorganic filler includes one or more selected from the group consisting of alumina, magnesium oxide, and calcium carbonate.

In the lithium-ion battery provided by the present disclosure, when the electrical conductivity of the electrolyte is 6.5-8.5 mS/cm, the electrical conductivity of the bottom coating layer is 1-6 mS/cm, the electrical conductivity of the positive electrode material layer is 1.6-12.5 mS/cm, and the above electrical conductivities satisfy the relationship $5.62 \leq \frac{{σ}_{e} {{σ}_{a}}^{3 / 2} {σ}_{c} ∗ 10}{{σ}_{e} {{σ}_{a}}^{3 / 2} + {σ}_{e} {σ}_{c} + {{σ}_{a}}^{3 / 2} {σ}_{c}} \leq 37.64$ , the occurrence of short circuits in the lithium-ion battery can be effectively reduced while the cycle performance of the battery is improved. Since short circuits caused by direct contact between the positive electrode current collector and the negative electrode active layer exhibit the highest heat generation rate and severely compromise battery safety, a bottom coating layer and a positive electrode material layer are formed on the positive electrode sheet. By ensuring that their electrical conductivities fall within the specific ranges defined by the above relationship, both excessive heat generation under high conductivity and performance degradation under low conductivity can be mitigated. Moreover, as the electrical conductivity of the electrolyte also impacts battery safety and cycle performance, the inventors have found through extensive experiments that when the electrolyte conductivity is within the range of 6.5-8.5 mS/cm and satisfies the above relationship, short-circuit risks are reduced and cycle performance is significantly improved. Accordingly, when the electrical conductivities of the electrolyte, the bottom coating layer, and the positive electrode material layer satisfy the above relationship, the probability of internal short circuits can be effectively reduced, thereby suppressing heat generation, avoiding high-temperature combustion or explosion, improving cycle life, and enhancing the pass rate in nail penetration tests.

### DETAILED DESCRIPTIONS OF THE EMBODIMENTS

In order to make the technical problems to be solved, technical solutions and beneficial effects of the present disclosure more clear, the present disclosure will be further explained in detail below with reference to the embodiments. It should be understood that the specific embodiments described here are intended only to illustrate the present disclosure and are not intended to limit it in any way.

The present disclosure provides a lithium-ion battery, including a positive electrode sheet and an electrolyte, the positive electrode sheet includes a positive electrode current collector, a bottom coating layer, and a positive electrode material layer; the bottom coating layer is disposed on a surface of the positive electrode current collector, the positive electrode material layer is disposed on a surface of the bottom coating layer away from the positive electrode current collector; and an electrical conductivity of the electrolyte, an electrical conductivity of the bottom coating layer, and an electrical conductivity of the positive electrode material layer satisfy the following relationship: $5.62 \leq \frac{{σ}_{e} {{σ}_{a}}^{3 / 2} {σ}_{c} ∗ 10}{{σ}_{e} {{σ}_{a}}^{3 / 2} + {σ}_{e} {σ}_{c} + {{σ}_{a}}^{3 / 2} {σ}_{c}} \leq 37.64$
where the electrical conductivity of the electrolyte is denoted as σe, in mS/cm;
the electrical conductivity of the bottom coating layer is denoted as σa, in mS/cm;
the electrical conductivity of the positive electrode material layer is denoted as σc, in mS/cm;
the electrical conductivity of the electrolyte (σe) is 6.5-8.5 mS/cm;
the electrical conductivity of the bottom coating layer (σa) is 1-6 mS/cm;
the electrical conductivity of the positive electrode material layer (σc) is 1.6-12.5 mS/cm.

Specifically, in the lithium-ion battery provided by the present disclosure, when the electrical conductivity of the electrolyte is 6.5-8.5 mS/cm, the electrical conductivity of the bottom coating layer is 1-6 mS/cm, the electrical conductivity of the positive electrode material layer is 1.6-12.5 mS/cm, and the above electrical conductivities satisfy the relationship $5.62 \leq \frac{{σ}_{e} {{σ}_{a}}^{3 / 2} {σ}_{c} ∗ 10}{{σ}_{e} {{σ}_{a}}^{3 / 2} + {σ}_{e} {σ}_{c} + {{σ}_{a}}^{3 / 2} {σ}_{c}} \leq 37.64$ , the occurrence of short circuits in the lithium-ion battery can be effectively reduced while the cycle performance of the battery is improved. Since short circuits caused by direct contact between the positive electrode current collector and the negative electrode active layer exhibit the highest heat generation rate and severely compromise battery safety, a bottom coating layer and a positive electrode material layer are formed on the positive electrode sheet. By ensuring that their electrical conductivities fall within the specific ranges defined by the above relationship, both excessive heat generation under high conductivity and performance degradation under low conductivity can be mitigated. Moreover, as the electrical conductivity of the electrolyte also impacts battery safety and cycle performance, the inventors have found through extensive experiments that when the electrolyte conductivity is within the range of 6.5-8.5 mS/cm and satisfies the above relationship, short-circuit risks are reduced and cycle performance is significantly improved. Accordingly, when the electrical conductivities of the electrolyte, the bottom coating layer, and the positive electrode material layer satisfy the above relationship, the probability of internal short circuits can be effectively reduced, thereby suppressing heat generation, avoiding high-temperature combustion or explosion, improving cycle life, and enhancing the pass rate in nail penetration tests.

In some embodiments, the electrical conductivity of the electrolyte, the electrical conductivity of the bottom coating layer, and the electrical conductivity of the positive electrode material layer satisfy the following relationship: $8.69 \leq \frac{{σ}_{e} {{σ}_{a}}^{3 / 2} {σ}_{c} ∗ 10}{{σ}_{e} {{σ}_{a}}^{3 / 2} + {σ}_{e} {σ}_{c} + {{σ}_{a}}^{3 / 2} {σ}_{c}} \leq 26.92$

By further specifying that the electrical conductivity of the electrolyte, the electrical conductivity of the bottom coating layer, and the electrical conductivity of the positive electrode material layer satisfy the above conditions, the probability of internal short circuits in the lithium-ion battery can be effectively reduced, the cycle performance of the battery can be improved, and the pass rate in nail penetration tests can also be improved.

In specific embodiments, the electrical conductivity of the electrolyte may be 6.5 mS/cm, 7.0 mS/cm, 7.14 mS/cm, 7.2 mS/cm, 7.4 mS/cm, 7.6 mS/cm, 7.8 mS/cm, 7.9 mS/cm, 8.0 mS/cm, 8.02 mS/cm, 8.03 mS/cm, 8.05 mS/cm, 8.07 mS/cm, or 8.5 mS/cm.

In preferred embodiments, the electrical conductivity of the electrolyte is 7.14-8.05 mS/cm.

In specific embodiments, the electrical conductivity of the bottom coating layer may be 1.0 mS/cm, 1.2 mS/cm, 1.4 mS/cm, 1.6 mS/cm, 1.8 mS/cm, 2.0 mS/cm, 2.3 mS/cm, 2.5 mS/cm, 2.7 mS/cm, 3.0 mS/cm, 3.2 mS/cm, 3.4 mS/cm, 3.6 mS/cm, 3.8 mS/cm, 4.2 mS/cm, 4.4 mS/cm, 4.6 mS/cm, 5.0 mS/cm, 5.2 mS/cm, 5.5 mS/cm, or 6.0 mS/cm.

In preferred embodiments, the electrical conductivity of the bottom coating layer is 1.2-5.5 mS/cm.

Forming a coating layer on the surface of the positive electrode current collector can prevent short circuits between the positive electrode current collector and the negative electrode active material layer. The electrical conductivity of the coating layer also affects the safety of the lithium-ion battery, as well as its charge/discharge and cycle performance. A coating layer with high electrical conductivity leads to a faster heat generation rate, thereby compromising battery safety, whereas a coating layer with low electrical conductivity provides higher safety but significantly impedes electron conduction between the positive electrode active layer and the positive electrode current collector, thus affecting the charge/discharge and cycle performance of the battery.

In specific embodiments, the electrical conductivity of the positive electrode material layer may be 2.0 mS/cm, 2.2 mS/cm, 2.3 mS/cm, 2.6 mS/cm, 3.1 mS/cm, 3.5 mS/cm, 4.0 mS/cm, 4.6 mS/cm, 5.0 mS/cm, 5.5 mS/cm, 6.0 mS/cm, 6.5 mS/cm, or 7.0 mS/cm.

In preferred embodiments, the electrical conductivity of the positive electrode material layer is 2.2-6.5 mS/cm.

In some embodiments, the electrical conductivity of the electrolyte, the electrical conductivity of the bottom coating layer, and the electrical conductivity of the positive electrode material layer satisfy the following relationship: $8.69 \leq \frac{{σ}_{e} {{σ}_{a}}^{3 / 2} {σ}_{c} ∗ 10}{{σ}_{e} {{σ}_{a}}^{3 / 2} + {σ}_{e} {σ}_{c} + {{σ}_{a}}^{3 / 2} {σ}_{c}} \leq 15.79$
the electrical conductivity of the electrolyte (σe) is 7.14-8.05 mS/cm;
the electrical conductivity of the bottom coating layer (σa) is 1.2-2.3 mS/cm;
the electrical conductivity of the positive electrode material layer (σc) is 3.04-4.5 mS/cm.

It should be noted that experimental verification by the inventors has shown that when the lithium-ion battery satisfies the above specified conditions and parameter ranges, the probability of internal short circuits in the lithium-ion battery can be effectively reduced, the heat generation of the battery can be lowered, high-temperature combustion or explosion of the lithium-ion battery can be avoided, and the performance of the lithium-ion battery in nail penetration tests can be improved.

In some embodiments, the electrical conductivity of the electrolyte, the electrical conductivity of the bottom coating layer, and the electrical conductivity of the positive electrode material layer satisfy the following relationship: $13.23 \leq \frac{{σ}_{e} {{σ}_{a}}^{3 / 2} {σ}_{c} ∗ 10}{{σ}_{e} {{σ}_{a}}^{3 / 2} + {σ}_{e} {σ}_{c} + {{σ}_{a}}^{3 / 2} {σ}_{c}} \leq 26.92$
the electrical conductivity of the electrolyte (σe) is 7.14-8.05 mS/cm;
the electrical conductivity of the bottom coating layer (σa) is 1.6-5.5 mS/cm;
the electrical conductivity of the positive electrode material layer (σc) is 2.2-6.5 mS/cm.

It should be noted that either excessively low or high electrical conductivities of the bottom coating layer and the positive electrode material layer are unfavorable for improving the safety and cycle performance of the battery. Extensive experimental studies conducted by the inventors have demonstrated that, when the electrical conductivities of the electrolyte, the bottom coating layer, and the positive electrode material layer fall within the above ranges, the cycle retention rate of the corresponding lithium-ion battery is significantly improved, indicating that the lithium-ion battery exhibits excellent cycle performance under the above specified conditions and parameter ranges.

In some embodiments, the electrical conductivity of the electrolyte, the electrical conductivity of the bottom coating layer, and the electrical conductivity of the positive electrode material layer satisfy the following relationship: $13.23 \leq \frac{{σ}_{e} {{σ}_{a}}^{3 / 2} {σ}_{c} ∗ 10}{{σ}_{e} {{σ}_{a}}^{3 / 2} + {σ}_{e} {σ}_{c} + {{σ}_{a}}^{3 / 2} {σ}_{c}} \leq 15.79$
the electrical conductivity of the electrolyte (σe) is 7.14-8.05 mS/cm;
the electrical conductivity of the bottom coating layer (σa) is 2.2-2.4 mS/cm;
the electrical conductivity of the positive electrode material layer (σc) is 3.04-4.5 mS/cm.

It should be noted that in extensive experimental verification conducted in the early stage, when the electrical conductivity of the electrolyte, the electrical conductivity of the bottom coating layer, and the electrical conductivity of the positive electrode material layer fall within the above ranges, the nail penetration pass rate and the cycle retention of the corresponding lithium-ion battery are improved. Accordingly, when the parameter ranges of the lithium-ion battery satisfy the above specified conditions and relationship of the present disclosure, both the nail penetration pass rate and the cycle performance of the lithium-ion battery are improved.

In some embodiments, the thickness of the bottom coating layer is 3-8 µm.

It should be noted that the thickness of the bottom coating layer affects the electron transport distance within the layer. A thinner bottom coating layer results in a shorter electron transport distance, thereby improving electrical conductivity. However, when the coating layer is too thick, it becomes difficult for current to penetrate the layer, leading to a reduction in electrical conductivity.

Extensive experimental tests conducted by the inventors in the early stage have demonstrated that when the thickness of the bottom coating layer falls within 3-8 µm, the electrical conductivity of the positive electrode material layer satisfies the above relationship.

In some embodiments, the bottom coating layer includes a first active material and an inorganic filler, the positive electrode material layer includes a second active material; a mass percentage of the first active material in the bottom coating layer is 0%-98%; a mass percentage of the inorganic filler in the bottom coating layer is 0%-98%; and a mass percentage of the second active material in the positive electrode material layer is 95%-98.5%.

In some embodiments, the electrical conductivity (ca) of the bottom coating layer is lower than the electrical conductivity (σc) of the positive electrode material layer, that is, σa < σc.

It should be noted that the bottom coating layer includes the inorganic filler, and theoretically the electrical conductivity of the bottom coating layer is lower than that of the positive electrode material layer. As a bottom coating layer with high electrical conductivity generates heat at a high rate and affects battery safety, the addition of the inorganic filler into the bottom coating layer in the present disclosure is beneficial for improving the safety of the lithium-ion battery.

It can also be understood from the description of the "safety coating layer" and the provided specific embodiments that the electrical conductivity of the bottom coating layer is lower than that of the positive electrode material layer. By defining the conductivity difference, the bottom coating layer can be distinguished from a conventional positive electrode material layer.

In some embodiments, the first active material and the second active material include one or more selected from the group consisting of lithium iron phosphate, lithium cobalt oxide, lithium manganese oxide, and lithium nickel cobalt manganese oxide ternary material.

In some embodiments, the inorganic filler includes one or more selected from the group consisting of alumina, magnesium oxide, and calcium carbonate.

It should be noted that the bottom coating layer and the positive electrode material layer further include a positive electrode binder and a positive electrode conductive agent. The bottom coating layer is obtained by mixing the positive electrode binder, the positive electrode conductive agent, and the first active material, and the positive electrode material layer is obtained by mixing the positive electrode binder, the positive electrode conductive agent, and the second active material.

The positive electrode binder includes at least one selected from the group consisting of polyvinylidene fluoride, a copolymer of vinylidene fluoride, polytetrafluoroethylene, a copolymer of vinylidene fluoride and hexafluoropropylene, a copolymer of tetrafluoroethylene and hexafluoropropylene, a copolymer of tetrafluoroethylene and perfluoroalkyl vinyl ether, a copolymer of ethylene and tetrafluoroethylene, a copolymer of vinylidene fluoride and tetrafluoroethylene, a copolymer of vinylidene fluoride and trifluoroethylene, a copolymer of vinylidene fluoride and trichloroethylene, a copolymer of vinylidene fluoride and fluoroethylene, a copolymer of vinylidene fluoride, hexafluoropropylene, and tetrafluoroethylene, and styrene-butadiene rubber.

The positive electrode conductive agent includes at least one selected from the group consisting of conductive carbon black, conductive graphite, conductive carbon fiber, carbon nanotubes, graphene, and reduced graphene oxide.

In some embodiments, the positive electrode sheet further includes a positive electrode current collector, and the positive electrode current collector is an aluminum foil.

In some embodiments, the lithium-ion battery further includes a separator and a negative electrode sheet, and the separator is disposed between the positive electrode sheet and the negative electrode sheet to form the lithium-ion battery.

The negative electrode sheet further includes a negative electrode coating layer, and the negative electrode coating layer includes a negative electrode active material. The negative electrode active material includes one or more selected from the group consisting of carbon-based negative electrode, silicon-based negative electrode, and lithium-based negative electrode.

The carbon-based negative electrode is selected from at least one of graphite, hard carbon, soft carbon, graphene, and mesocarbon microbeads. The silicon-based negative electrode is selected from at least one of silicon materials, oxides of silicon, silicon-carbon composite materials, and silicon alloy materials. Specifically, the lithium-based negative electrode is selected from metallic lithium or lithium alloys.

Specifically, the lithium-ion battery is formed by the positive electrode sheet, the negative electrode sheet, and the separator. When the relationship in the present disclosure is satisfied, the probability of internal short circuits in the lithium-ion battery can be effectively reduced, thereby reducing heat generation of the battery, preventing high-temperature combustion or explosion of the lithium-ion battery, improving cycle performance of the battery, and improving the pass rate of the lithium-ion battery in nail penetration and compression test using a screw.

The present disclosure is further illustrated by the following embodiments.

**Table 1**

| Group | Electrical conductivity of the electrolyte | Electrical conductivity of the bottom coating layer | Electrical conductivity of the positive electrode material layer | $\frac{{σ}_{e} {{σ}_{a}}^{3 / 2} {σ}_{c} ∗ 10}{{σ}_{e} {{σ}_{a}}^{3 / 2} + {σ}_{e} {σ}_{c} + {{σ}_{a}}^{3 / 2} {σ}_{c}}$ |
|---|---|---|---|---|
| Embodiment 1 | 8.05 | 1.2 | 4.0 | 8.81 |
| Embodiment 2 | 7.14 | 1.2 | 4.0 | 8.69 |
| Embodiment 3 | 8.05 | 2.3 | 3.04 | 13.52 |
| Embodiment 4 | 7.14 | 2.3 | 3.04 | 13.23 |
| Embodiment 5 | 8.05 | 2.3 | 4.5 | 15.79 |
| Embodiment 6 | 7.14 | 2.3 | 4.5 | 15.41 |
| Embodiment 7 | 8.05 | 1.6 | 2.2 | 9.32 |
| Embodiment 8 | 7.14 | 5.5 | 6.5 | 26.92 |
| Comparative Example 1 | 7.14 | 0.8 | 2.6 | 5.20 |
| Comparative Example 2 | 7.74 | 0.8 | 2.0 | 4.93 |
| Comparative Example 3 | 6.51 | 0.8 | 4.0 | 5.55 |
| Comparative Example 4 | 8.45 | 5.5 | 15.0 | 38.09 |
| Comparative Example 5 | 8.31 | 6.0 | 15.0 | 39.21 |
| Comparative Example 6 | 7.74 | 7.0 | 13.5 | 38.87 |
| Comparative Example 7 | 6.0 | 2.3 | 6.2 | 16.27 |
| Comparative Example 8 | 9.0 | 2.3 | 6.2 | 17.89 |
| Comparative Example 9 | 7.5 | 0.5 | 6.8 | 3.22 |
| Comparative Example 10 | 7.5 | 6.5 | 6.8 | 29.35 |
| Comparative Example 11 | 7.5 | 3.5 | 1.2 | 8.93 |
| Comparative Example 12 | 7.5 | 3.5 | 14 | 27.97 |
| Comparative Example 13 | 6.0 | 0.5 | 1.2 | 2.61 |
| Comparative Example 14 | 9.0 | 7.0 | 13.5 | 41.81 |

### Embodiment 1

This embodiment is provided to illustrate a lithium-ion battery and a preparation method disclosed in the present disclosure, and includes the following operation steps:

### Preparation of positive electrode sheet

The binder PVDF, the conductive agent Super P, CNT, and lithium iron phosphate are added into the NMP solvent in preset weights and fully stirred to obtain a uniform mixture, thereby forming the bottom coating layer slurry, and the electrical conductivity of the bottom coating layer is 2.3 mS/cm.

The binder PVDF, the conductive agent Super P, CNT, and lithium cobalt oxide are added into the NMP solvent in preset weights and fully stirred to obtain a uniform mixture, thereby forming the positive electrode material layer slurry, and the electrical conductivity of the positive electrode material layer is 3.04 mS/cm.

The bottom coating layer slurry is uniformly coated on the positive electrode current collector, and the positive electrode material layer slurry is subsequently coated on the surface of the first coating layer. After drying, calendering, and slitting, the positive electrode sheet is obtained.

### Preparation of negative electrode sheet

Graphite, conductive carbon, sodium carboxymethyl cellulose, and styrene-butadiene rubber are taken in predetermined mass ratios. Sodium carboxymethyl cellulose is first added into pure water and fully stirred to obtain a uniform mixture. Conductive carbon is then added and fully stirred to obtain a uniform mixture, followed by adding graphite and fully stirring to obtain the required negative electrode slurry.

The prepared negative electrode slurry is uniformly coated on the negative electrode current collector, and the coating is dried, calendered, and slit to obtain the negative electrode sheet.

### Preparation of electrolyte

Ethylene carbonate, diethyl carbonate, and ethyl methyl carbonate are mixed to obtain an organic solvent. A lithium salt is dissolved in the organic solvent and thoroughly mixed to obtain the electrolyte. The electrical conductivity of the electrolyte is 8.05 mS/cm.

### Preparation of lithium-ion battery

The separator is placed between the positive electrode sheet and the negative electrode sheet, and tabs are respectively welded to the positive electrode sheet and the negative electrode sheet. A bare cell is formed by winding or stacking. The bare cell is then placed into a battery case, followed by electrolyte injection and sealing. After being left to stand, hot pressing and formation are performed to obtain a lithium-ion battery.

### Embodiments 2-8

Embodiments 2-8 are provided to illustrate the lithium-ion battery and the preparation method disclosed in the present disclosure, including most of the operations of Embodiment 1, and the differences are as follows.

The electrical conductivity of the electrolyte, the electrical conductivity of the bottom coating layer, the electrical conductivity of the positive electrode material layer, and the values of the relationship in Embodiments 2-8 are specified by the parameters provided in Embodiments 2-8 of Table 1.

### Comparative Examples 1-14

Comparative Examples 1-14 are provided to illustrate the lithium-ion battery and the preparation method disclosed in the present disclosure, including most of the operations of Embodiment 1, and the differences are as follows.

The electrical conductivity of the electrolyte, the electrical conductivity of the bottom coating layer, and the electrical conductivity of the positive electrode material layer in Comparative Examples 1-14 are as specified by the electrical conductivity values provided for Comparative Examples 1-14 in Table 1.

### Performance test

Performance tests are conducted on Embodiments 1-8 and Comparative Examples 1-14 prepared as described above, as follows.

### Electrical conductivity testing method

The electrode sheet is cut into a 6 cm×10 cm rectangle and placed flat in a fixture. The fixture is then placed into an IEST BER1300 electrode sheet resistance tester. The test is conducted under a pressure of 25 MPa with a holding time of 15 s, at a temperature of 25 °C and a humidity of 70 %RH.

### Nail penetration testing method for the lithium-ion battery

Using a nail penetration tester BE9002CY, the fully charged battery is placed into the instrument. A steel needle with a diameter of 3 mm is inserted into the cell at the geometric center of the cell surface at a speed of 15 mm/s until it fully penetrates the battery. After penetration, the steel needle is kept inside the battery for 30 s and then pulled out.

### Cycle performance test at room temperature

The formed sodium-ion battery is placed at room temperature (25 °C ± 3 °C). The battery is charged to 3.9 V with a constant current of 1C, followed by constant-voltage charging at 3.9 V with a cutoff current of 0.05C, and then discharged to 1.5 V with a constant current of 1C. This charge/discharge procedure is repeated for 1000 cycles.

Capacity retention at 25 °C after 1000 cycles is calculated using the following formula: 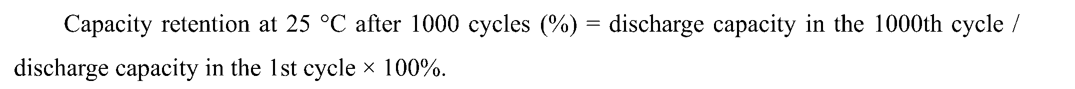 Capacity retention at 25 °C after 1000 cycles (%) = discharge capacity in the 1000th cycle / discharge capacity in the 1st cycle × 100%.

The test results are presented in Table 2.

**Table 2**

| Group | Nail penetration pass rate | Capacity Retention at room temperature after 1000 cycles |
|---|---|---|
| Embodiment 1 | 100% | 88% |
| Embodiment 2 | 100% | 88% |
| Embodiment 3 | 100% | 92% |
| Embodiment 4 | 100% | 92% |
| Embodiment 5 | 100% | 92.0% |
| Embodiment 6 | 100% | 92.0% |
| Embodiment 7 | 90% | 90.0% |
| Embodiment 8 | 85% | 92.0% |
| Comparative Example 1 | 100% | 50.0% |
| Comparative Example 2 | 100% | 45.0% |
| Comparative Example 3 | 100% | 55.0% |
| Comparative Example 4 | 60% | 92.0% |
| Comparative Example 5 | 55% | 92.0% |
| Comparative Example 6 | 50% | 92.0% |
| Comparative Example 7 | 80% | 60.0% |
| Comparative Example 8 | 75% | 65.0% |
| Comparative Example 9 | 90% | 50.0% |
| Comparative Example 10 | 60% | 80.0% |
| Comparative Example 11 | 90% | 50.0% |
| Comparative Example 12 | 65% | 85.0% |
| Comparative Example 13 | 90% | 20.0% |
| Comparative Example 14 | 60% | 85.0% |

As shown in Table 2, the sodium-ion batteries prepared in Embodiments 1-8 exhibit overall higher nail penetration pass rates and higher cycle capacity retention at room temperature compared with Comparative Examples 1-14. The test results of Embodiments 1-8 and Comparative Examples 1-14 show that when the electrical conductivity of the electrolyte, the electrical conductivity of the bottom coating layer, and the electrical conductivity of the positive electrode material layer satisfy the relationship $5.62 \leq \frac{{σ}_{e} {{σ}_{a}}^{3 / 2} {σ}_{c} ∗ 10}{{σ}_{e} {{σ}_{a}}^{3 / 2} + {σ}_{e} {σ}_{c} + {{σ}_{a}}^{3 / 2} {σ}_{c}} \leq 37.64$, and when the electrical conductivity (σe) of the electrolyte is 6.5-8.5 mS/cm, the electrical conductivity (σa) of the bottom coating layer is 1-6 mS/cm, and the electrical conductivity (σc) of the positive electrode material layer is 1.6-12.5 mS/cm, short circuits of the battery are mitigated and the adverse effect of excessively low electrical conductivity on cycle performance is reduced, short circuits of the corresponding lithium-ion battery are alleviated, and the cycle performance is effectively improved. In addition, in Embodiment 7, the electrical conductivities of the bottom coating layer and the positive electrode material layer are lower than those in the other embodiments, while in Embodiment 8, the electrical conductivities of the bottom coating layer and the positive electrode material layer take relatively high values. Excessively low or excessively high electrical conductivities of the bottom coating layer and the positive electrode material layer are unfavorable to the improvement of battery safety and cycle performance. As a result, the overall test results of Embodiments 7-8 are slightly inferior to those of the other embodiments.

According to the test results of Embodiments 1-8 and Comparative Examples 1-14, in Comparative Examples 1-3, the electrical conductivity of the bottom coating layer and the value of $\frac{{σ}_{e} {{σ}_{a}}^{3 / 2} {σ}_{c} ∗ 10}{{σ}_{e} {{σ}_{a}}^{3 / 2} + {σ}_{e} {σ}_{c} + {{σ}_{a}}^{3 / 2} {σ}_{c}}$ do not fall within the specified ranges. In Comparative Examples 4-13, one or more of the following factors also do not fall within the specified ranges: the electrical conductivity of the electrolyte, the electrical conductivity of the bottom coating layer, the electrical conductivity of the positive electrode material layer, and the value of $\frac{{σ}_{e} {{σ}_{a}}^{3 / 2} {σ}_{c} ∗ 10}{{σ}_{e} {{σ}_{a}}^{3 / 2} + {σ}_{e} {σ}_{c} + {{σ}_{a}}^{3 / 2} {σ}_{c}}$. Under such conditions, improvement of the cycle performance of the battery and mitigation of short circuits are both unfavorable. Accordingly, when the electrical conductivity of the electrolyte, the electrical conductivity of the bottom coating layer, and the electrical conductivity of the positive electrode material layer all fall within the specified ranges of the present disclosure and jointly satisfy the relationship, the probability of internal short circuits in the lithium-ion battery can be effectively reduced, the heat generation of the battery can be lowered, combustion or explosion of the lithium-ion battery at high temperatures can be avoided, and the cycle performance of the battery can be improved.

The above are only preferred embodiments of the present disclosure and are not intended to limit the scope of the disclosure. Any modifications, equivalent substitutions, or improvements made within the spirit and principle of the present disclosure should be included within the scope of protection of the application.

## Claims

1. A lithium-ion battery, comprising a positive electrode sheet and an electrolyte, **characterized in that** the positive electrode sheet comprises a positive electrode current collector, a bottom coating layer, and a positive electrode material layer; the bottom coating layer is disposed on a surface of the positive electrode current collector, the positive electrode material layer is disposed on a surface of the bottom coating layer opposite to the positive electrode current collector; and an electrical conductivity of the electrolyte, an electrical conductivity of the bottom coating layer, and an electrical conductivity of the positive electrode material layer satisfy the following relationship: $5.62 \leq \frac{{σ}_{e} {{σ}_{a}}^{3 / 2} {σ}_{c} ∗ 10}{{σ}_{e} {{σ}_{a}}^{3 / 2} + {σ}_{e} {σ}_{c} + {{σ}_{a}}^{3 / 2} {σ}_{c}} \leq 37.64$
where the electrical conductivity of the electrolyte is denoted as σe, in mS/cm;
the electrical conductivity of the bottom coating layer is denoted as σa, in mS/cm;
the electrical conductivity of the positive electrode material layer is denoted as σc, in mS/cm;
the electrical conductivity of the electrolyte (σe) is 6.5-8.5 mS/cm;
the electrical conductivity of the bottom coating layer (σa) is 1-6 mS/cm;
the electrical conductivity of the positive electrode material layer (σc) is 1.6-12.5 mS/cm.

2. The lithium-ion battery according to claim 1, wherein the electrical conductivity of the electrolyte, the electrical conductivity of the bottom coating layer, and the electrical conductivity of the positive electrode material layer satisfy the following relationship: $8.69 \leq \frac{{σ}_{e} {{σ}_{a}}^{3 / 2} {σ}_{c} ∗ 10}{{σ}_{e} {{σ}_{a}}^{3 / 2} + {σ}_{e} {σ}_{c} + {{σ}_{a}}^{3 / 2} {σ}_{c}} \leq 26.92 .$

3. The lithium-ion battery according to claim 1, wherein the electrical conductivity of the electrolyte is 7.14-8.05 mS/cm.

4. The lithium-ion battery according to claim 1, wherein the electrical conductivity of the bottom coating layer is 1.2-5.5 mS/cm.

5. The lithium-ion battery according to claim 1, wherein the electrical conductivity of the positive electrode material layer is 2.2-6.5 mS/cm.

6. The lithium-ion battery according to claim 1, wherein the electrical conductivity of the electrolyte, the electrical conductivity of the bottom coating layer, and the electrical conductivity of the positive electrode material layer satisfy the following relationship: $8.69 \leq \frac{{σ}_{e} {{σ}_{a}}^{3 / 2} {σ}_{c} ∗ 10}{{σ}_{e} {{σ}_{a}}^{3 / 2} + {σ}_{e} {σ}_{c} + {{σ}_{a}}^{3 / 2} {σ}_{c}} \leq 15.79$
the electrical conductivity of the electrolyte (σe) is 7.14-8.05 mS/cm;
the electrical conductivity of the bottom coating layer (σa) is 1.2-2.3 mS/cm;
the electrical conductivity of the positive electrode material layer (σc) is 3.04-4.5 mS/cm.

7. The lithium-ion battery according to claim 1, wherein the electrical conductivity of the electrolyte, the electrical conductivity of the bottom coating layer, and the electrical conductivity of the positive electrode material layer satisfy the following relationship: $13.23 \leq \frac{{σ}_{e} {{σ}_{a}}^{3 / 2} {σ}_{c} ∗ 10}{{σ}_{e} {{σ}_{a}}^{3 / 2} + {σ}_{e} {σ}_{c} + {{σ}_{a}}^{3 / 2} {σ}_{c}} \leq 26.92$
the electrical conductivity of the electrolyte (σe) is 7.14-8.05 mS/cm;
the electrical conductivity of the bottom coating layer (σa) is 1.6-5.5 mS/cm;
the electrical conductivity of the positive electrode material layer (σc) is 2.2-6.5 mS/cm.

8. The lithium-ion battery according to claim 1, wherein the electrical conductivity of the electrolyte, the electrical conductivity of the bottom coating layer, and the electrical conductivity of the positive electrode material layer satisfy the following relationship: $13.23 \leq \frac{{σ}_{e} {{σ}_{a}}^{3 / 2} {σ}_{c} ∗ 10}{{σ}_{e} {{σ}_{a}}^{3 / 2} + {σ}_{e} {σ}_{c} + {{σ}_{a}}^{3 / 2} {σ}_{c}} \leq 15.79$
the electrical conductivity of the electrolyte (σe) is 7.14-8.05 mS/cm;
the electrical conductivity of the bottom coating layer (σa) is 2.2-2.4 mS/cm;
the electrical conductivity of the positive electrode material layer (σc) is 3.04-4.5 mS/cm.

9. The lithium-ion battery according to claim 1, wherein the bottom coating layer comprises a first active material and an inorganic filler, the positive electrode material layer comprises a second active material; a mass percentage of the first active material in the bottom coating layer is 0%-98%; a mass percentage of the inorganic filler in the bottom coating layer is 0%-98%; and a mass percentage of the second active material in the positive electrode material layer is 95%-98.5%.

10. The lithium-ion battery according to claim 9, wherein the inorganic filler comprises one or more selected from the group consisting of alumina, magnesium oxide, and calcium carbonate.
